# EUROPÄISCHE PATENTANMELDUNG

(11) **EP 4 813 792 A1**
(43) Veröffentlichungstag der Anmeldung: **30.09.2026**
(21) Anmeldenummer: 25165959.5
(22) Anmeldetag: 25.03.2025
(51) Int. Cl.: B61D 17/22, B61G 5/06, B60D 5/00, B60R 16/02

(54) **MITTELBÜGELSYSTEM FÜR EIN MEHRGLIEDRIGES FAHRZEUG, MEHRGLIEDRIGES FAHRZEUG**

(71) Anmelder: ATG Autotechnik GmbH, 22962 Siek (DE)
(72) Erfinder: August, Michael, 22962 Siek (DE)
(74) Vertreter: GLAWE DELFS MOLL

(57) **Zusammenfassung**

Mittelbügelsystem für ein zwischen einem ersten Wagen und einem zweiten Wagen eines mehrgliedrigen Fahrzeugs angeordnetes Fahrzeuggelenk, umfassend einen in Querrichtung ausgerichteten Mittelbügel und einen sich zwischen dem ersten Wagen und dem zweiten Wagen erstreckenden Kabelstrang. Der Mittelbügel umschließt einen für Passagiere bestimmten Durchgang. Der Kabelstrang ist oberhalb des Durchgangs angeordnet. Eine erste Blattfederkomponente hält einen ersten Abschnitt des Kabelstrangs, eine zweite Blattfederkomponente hält einen zweiten Abschnitt des Kabelstrangs. Die erste Blattfederkomponente und die zweite Blattfederkomponente sind über einen Führungshebel mit dem Mittelbügel verbunden. Die erste Blattfederkomponente ist über ein erstes Schwenkgelenk mit dem Führungshebel verbunden. Die zweite Blattfederkomponente ist über ein zweites Schwenkgelenk mit dem Führungshebel verbunden. Die erste Schwenkachse des ersten Schwenkgelenks und die zweite Schwenkachse des zweiten Schwenkgelenks schneiden eine senkrechte Längsebene des Mittelbügelsystems. Die Erfindung betrifft auch ein mehrgliedriges Fahrzeug.

## Beschreibung

Die Erfindung betrifft ein Mittelbügelsystem für ein mehrgliedriges Fahrzeug. Die Erfindung betrifft auch ein mehrgliedriges Fahrzeug, beispielsweise in Form eines Gelenkbusses oder eines Straßenbahnfahrzeugs.

Mittelbügelsysteme können bei verschiedenen Arten von straßengebundenen oder schienengebundenen Fahrzeugen verwendet werden, bei denen während der Fahrt ein Übergang der Passagiere zwischen den Wagen des mehrgliedrigen Fahrzeugs möglich ist. Um die Passagiere vor Umgebungseinflüssen zu schützen, ist der Übergang zwischen den Wagen normalerweise mit einem Faltenbalg versehen, der das Fahrzeuggelenk umgibt.

Es gibt technische Funktionen, die mehrere Wagen eines mehrgliedrigen Fahrzeugs betreffen. Beispielsweise kann ein vorne sitzender Fahrer einen Lichtschalter betätigen, um ein Rücklicht am hinteren Ende des Fahrzeugs in Betrieb zu setzen. Dafür ist ein elektrisches Kabel erforderlich, das sich über den Zwischenraum zwischen den Wagen hinweg erstreckt. Weitere Funktionen erfordern Hydraulikleitungen, Luftschläuche und sonstige Versorgungsleitungen zwischen den Wagen. Bei einem mit einer elektrischen Batterie angetriebenen Fahrzeug können die Versorgungsleitungen zwischen der Batterie und dem Antriebsmotor über den Zwischenraum hinweg geführt sein. Mehrere Leitungen, die verschiedene Funktionen betreffen können, können zu einem Kabelstrang zusammengefasst sein.

Im Allgemeinen wird angestrebt, den für Passagiere bestimmten Boden möglichst niedrig anzuordnen, um den Passagieren den Einstieg und Ausstieg aus dem Fahrzeug zu erleichtern. Oberhalb der Passagiere steht mehr Raum zur Verfügung, weswegen der Kabelstrang häufig oberhalb des Durchgangs über den Zwischenraum zwischen zwei Wagen geführt ist.

Um zu verhindern, dass die Kabel beim Überfahren von Bodenwellen oder bei Unebenheiten an dem Mittelbügel anstoßen, ist es bekannt, den Kabelstrang mit einer Kabelführung zu versehen, die den Kabelstrang relativ zu dem Mittelbügel hält, EP 0 897 337 A1, EP 2 384 913 A1, EP 3 210 803 A1, EP 3 354 495 A1. Es hat sich als nicht ganz einfach erwiesen, die Kabelführung so zu gestalten, dass die im Betrieb des Fahrzeugs auftretenden Bewegungen in dem Kabelstrang aufgenommen werden können, ohne dass innerhalb der Kabelführung übermäßige mechanische Spannungen auftreten.

Der Erfindung liegt die Aufgabe zugrunde, ein Mittelbügelsystem für ein mehrgliedriges Fahrzeug sowie ein mehrgliedriges Fahrzeug vorzustellen, mit denen die genannten Nachteile vermindert werden. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Ein erfindungsgemäßes Mittelbügelsystem für ein zwischen einem ersten Wagen und einem zweiten Wagen eines mehrgliedrigen Fahrzeugs angeordnetes Fahrzeuggelenk umfasst einen in Querrichtung ausgerichteten Mittelbügel und einen sich zwischen dem ersten Wagen und dem zweiten Wagen erstreckenden Kabelstrang. Der Mittelbügel umschließt einen für Passagiere bestimmten Durchgang. Der Kabelstrang ist oberhalb des Durchgangs angeordnet. Eine erste Blattfederkomponente hält einen ersten Abschnitt des Kabelstrangs, eine zweite Blattfederkomponente hält einen zweiten Abschnitt des Kabelstrangs. Die erste Blattfederkomponente und die zweite Blattfederkomponente sind über einen Führungshebel mit dem Mittelbügel verbunden. Die erste Blattfederkomponente ist über ein erstes Schwenkgelenk mit dem Führungshebel verbunden. Die zweite Blattfederkomponente ist über ein zweites Schwenkgelenk mit dem Führungshebel verbunden. Die erste Schwenkachse des ersten Schwenkgelenks und die zweite Schwenkachse des zweiten Schwenkgelenks schneiden eine senkrechte Längsebene des Mittelbügelsystems.

Die Erfindung geht davon aus, dass eine als Blattfeder ausgebildete Kabelführung hilfreich ist, um einen Kabelstrang entlang eines definierten Wegs in dem Zwischenraum zwischen dem ersten Wagen und dem zweiten Wagen eines mehrgliedrigen Fahrzeugs zu führen. Ein Teil der im Betrieb auftretenden Bewegungen zwischen dem ersten Wagen und dem zweiten Wagen kann im Wege einer Verformung der Blattfeder aufgenommen werden. Allerdings hat sich herausgestellt, dass insbesondere bei Nickbewegungen große Spannungen innerhalb der Blattfeder auftreten können, welche bei bekannten Lösungen (siehe beispielsweise EP 3 210 803 A1) nicht ausreichend vom Gesamtsystem aufgenommen werden können. Wenn das Gelenk unterhalb des Durchgangs angeordnet ist, führt eine Nickbewegung dazu, dass es im oberen Bereich des Mittelbügelsystems zu einer erheblichen Abstandsänderung zwischen dem ersten Wagen und dem zweiten Wagen kommt. Bei Nickbewegungen können deswegen unerwünscht hohe mechanische Spannungen in der Blattfeder auftreten.

Mit der Erfindung wird vorgeschlagen, den Kabelstrang mittels einer ersten Blattfederkomponente und einer zweiten Blattfederkomponente zu führen, wobei beide Blattfederkomponenten über einen Führungshebel relativ zu dem Mittelbügel gehalten sind. Indem beide Blattfederkomponenten über Schwenkgelenke an dem Führungshebel angebracht sind, deren Achsen für Nickbewegungen des Fahrzeugs angepasst sind, können bestimmte Bewegungen, die bislang durch eine Verformung der Blattfederkomponente aufgenommen werden mussten, spannungsfrei innerhalb der Schwenkgelenke aufgenommen werden.

Kabel im Sinne der vorliegenden Erfindung dienen dazu, technische Funktionen der Wagen des mehrgliedrigen Fahrzeugs miteinander zu verknüpfen. Der Begriff Kabel umfasst alle Versorgungsleitungen, über die Signale oder Kräfte zwischen den Wagen übertragen werden. Vom Begriff Kabel umfasst sind insbesondere elektrische Kabel, Glasfaserleitungen, Hydraulikleitungen, Luftschläuche für Klimaanlage und Heizung. Bei dem erfindungsgemäßen Mittelbügelsystem erstreckt sich ein Kabelstrang aus einer Mehrzahl solcher Kabel über den Zwischenraum zwischen den beiden an das Fahrzeuggelenk angrenzenden Wagen hinweg.

Die beiden Wagen können ein Vorderwagen und ein Hinterwagen eines zweigliedrigen Fahrzeugs sein, beispielsweise eines Gelenkbusses. Möglich ist auch, dass sich ausgehend von dem Fahrzeuggelenk in einer oder beiden Längsrichtungen mehr als ein Wagen anschließen. Die Längsrichtung schließt mit dem Mittelbügel einen rechten Winkel ein. Eine senkrechte Längsebene ist eine vertikale Ebene, die sich in Längsrichtung erstreckt.

Die Bewegungen, die im Betrieb des mehrgliedrigen Fahrzeugs zwischen dem ersten Wagen und dem zweiten Wagen stattfinden, sind komplex. Sie umfassen Drehen, Nicken, Wanken sowie Kombinationen daraus. Als Nickbewegung wird eine Bewegung bezeichnet, die sich ergibt, wenn ein mehrgliedriges Fahrzeug geradeaus über eine Kuppe oder durch eine Senke fährt.

Die Schwenkachse des ersten Schwenkgelenks (erste Schwenkachse) kann einen Winkel von wenigstens 45°, vorzugsweise wenigstens 70° mit der senkrechten Längsebene einschließen. Insbesondere kann die Schwenkachse des ersten Schwenkgelenks sich parallel zum Mittelbügel und in horizontaler Richtung erstrecken. Dies entspricht einer Ausrichtung in Querrichtung, sodass die senkrechte Längsebene unter einem Winkel von 90° geschnitten wird. Entsprechendes kann für die Ausrichtung der Schwenkachse des zweiten Schwenkgelenks (zweite Schwenkachse) gelten. Die erste Schwenkachse und die zweite Schwenkachse können parallel zueinander ausgerichtet sein. Die erste Schwenkachse und die zweite Schwenkachse können voneinander beabstandet sein. Möglich ist auch, dass die erste Schwenkachse und die zweite Schwenkachse koaxial miteinander sind.

Die erste Blattfederkomponente kann sich ausgehend von dem Mittelbügel in Richtung des ersten Wagens erstrecken. Die erste Blattfederkomponente kann ein zentrales Ende und ein peripheres Ende aufweisen, wobei das zentrale Ende nahe dem Mittelbügel und das periphere Ende nahe dem ersten Wagen angeordnet ist. Das erste Schwenkgelenk kann im Bereich des zentralen Endes der ersten Blattfederkomponente angeordnet sein.

Das periphere Ende der ersten Blattfederkomponente kann an dem ersten Wagen angebracht sein. Die erste Blattfederkomponente kann über eine erste Konsole mit dem ersten Fahrzeug verbunden sein, wobei die erste Konsole an einem Endrahmen des ersten Fahrzeugs angebracht ist und in Richtung des Mittelbügels vorspringt.

Die erste Blattfederkomponente kann über ein drittes Schwenkgelenk an dem ersten Wagen angebracht sein. Die Schwenkachse des dritten Schwenkgelenks (dritte Schwenkachse) kann eine andere Ausrichtung haben als die erste Schwenkachse am anderen Ende der ersten Blattfederkomponente. Die Angabe bezieht sich auf einen Normalzustand des Mittelbügelsystems, in dem der erste Wagen und der zweite Wagen geradlinig in einer Ebene hintereinanderstehen. Der Winkel zwischen der ersten Schwenkachse und der dritten Schwenkachse kann größer sein als 45°, vorzugsweise größer sein als 70° und insbesondere 90° sein. Die dritte Schwenkachse kann sich parallel zu der senkrechten Längsebene erstrecken. Die dritte Schwenkachse kann im Normalzustand des Fahrzeugs senkrecht ausgerichtet sein.

Die für die erste Blattfederkomponente genannten Merkmale können einzeln oder in Kombination auch bei der zweiten Blattfederkomponente verwirklicht sein. Das periphere Ende der zweiten Blattfederkomponente kann über ein viertes Schwenkgelenk an dem zweiten Fahrzeug angebracht sein. Die Schwenkachse des vierten Schwenkgelenks (vierte Schwenkachse) kann mit der zweiten Schwenkachse einen Winkel von wenigstens 45°, vorzugsweise einen Winkel von wenigstens 70°, weiter vorzugsweise einen Winkel von 90° einschließen.

Indem die erste Blattfederkomponente und die zweite Blattfederkomponente an beiden ihren Enden über Schwenkgelenke gelagert sind, können die verschiedenen Bewegungen, die im Betrieb des Fahrzeugs zwischen dem ersten Wagen und dem zweiten Wagen auftreten, zu einem großen Teil spannungsfrei innerhalb der Schwenkgelenke aufgenommen werden. In den Blattfederkomponenten auftretende mechanische Spannungen werden weiter reduziert.

Das zentrale Ende der ersten Blattfederkomponente kann in einem kleinen Abstand zu dem zentralen Ende der zweiten Blattfederkomponente angeordnet sein. Der Abstand kann beispielsweise kleiner sein als 20 cm, vorzugsweise kleiner sein als 10 cm, weiter vorzugsweise kleiner sein als 5 cm. Das erste Schwenkgelenk und das zweite Schwenkgelenk können so angeordnet sein, dass das zentrale Ende der ersten Blattfederkomponente mit dem zentralen Ende der zweiten Blattfederkomponente fluchtet. Die erste Blattfederkomponente und die zweite Blattfederkomponente können gemeinsam einen gebogenen Weg in dem Zwischenraum zwischen dem ersten Wagen und dem zweiten Wagen aufspannen.

Jede Blattfederkomponente kann ein oder mehrere Trageelemente umfassen, um den Kabelstrang relativ zu der jeweiligen Blattfederkomponente zu halten. Auf diese Weise kann der Kabelstrang so gehalten werden, dass er im Zwischenraum zwischen dem ersten Wagen und dem zweiten Wagen im Wesentlichen den Weg nimmt, wie er durch die Blattfederkomponenten vorgegeben ist. Der Abstand zwischen den Trageelementen kann so bemessen sein, dass der Kabelstrang den Weg zwischen zwei benachbarten Trageelementen durch seine Eigenstabilität überbrücken kann.

Als Blattfeder wird ein lang gestrecktes Element bezeichnet, das sich quer zu seiner Längsrichtung in einer Richtung leicht elastisch verformen lässt und in einer anderen Richtung schwerer elastisch verformen lässt. Die erste Blattfederkomponente und die zweite Blattfederkomponente können so ausgerichtet sein, dass sie gegenüber Verformungen innerhalb einer horizontalen Ebene einen geringeren Widerstand haben als gegenüber Verformungen, die aus der horizontalen Ebene herausführen.

Die Richtung, in der das zentrale Ende der ersten Blattfederkomponente auf das erste Schwenkgelenk zuläuft, kann mit der Richtung, in der das periphere Ende der ersten Blattfederkomponente auf das dritte Schwenkgelenk zuläuft, einen Winkel von wenigstens 45°, vorzugsweise einen Winkel von wenigstens 70° einschließen. Die Angaben beziehen sich auf Winkel innerhalb einer horizontalen Ebene sowie auf den Normalzustand des mehrgliedrigen Fahrzeugs. Entsprechendes kann für das zentrale Ende und das periphere Ende der zweiten Blattfederkomponente gelten.

Der Führungshebel kann einen Gelenkhalter umfassen, an dem das erste Schwenkgelenk und das zweite Schwenkgelenk angebracht sind. Der Gelenkhalter kann über ein fünftes Schwenkgelenk an einem Hebelteil des Führungshebels angebracht sein. Die Schwenkachse des fünften Schwenkgelenks (fünfte Schwenkachse) kann parallel zu der ersten Schwenkachse und/oder zu der zweiten Schwenkachse ausgerichtet sein. Die Nummerierung von Schwenkgelenken und Schwenkachsen dient der Unterscheidung und beinhaltet keine Aussage über die insgesamt vorhandene Anzahl an Elementen.

Der Führungshebel kann an einer Linearführung aufgehängt sein, die eine Bewegung des Führungshebels relativ zu dem Mittelbügel ermöglicht. Die Linearführung kann eine Bewegung in Richtung des Mittelbügels und damit in Querrichtung des mehrgliedrigen Fahrzeugs zulassen. Der Führungshebel kann zusätzlich oder alternativ dazu schwenkbar relativ zu dem Mittelbügel gelagert sein. Insbesondere kann eine Schwenkbewegung zugelassen werden, deren Achse parallel zur ersten Schwenkachse und/oder zur zweiten Schwenkachse ausgerichtet ist. Der Schwenkbereich kann sich über wenigstens +/-10°, vorzugsweise über wenigstens +/-20°, weiter vorzugsweise über +/-30° erstrecken.

Die Linearführung kann eine mit dem Mittelbügel verbundene Stange umfassen, an der der Führungshebel aufgehängt ist. Die Achse des ersten Schwenkgelenks kann mit der Achse der Stange übereinstimmen. Insbesondere kann an dem Führungshebel eine Aufnahme ausgebildet sein, die sich beidseitig der Stange erstreckt. Die Aufnahme kann eine Führungsfläche aufweisen, die auf der Querstange aufliegt und die bei einer Schwenkbewegung des ersten Schwenkgelenks auf der Oberfläche der Stange gleitet. Die Stange kann in Querrichtung ausgerichtet sein. Die Stange kann sich geradlinig in horizontaler Richtung erstrecken. Die Stange kann an ihrer Oberseite eine im Querschnitt abgerundete Kontur haben, insbesondere kann die Stange im Querschnitt kreisförmig sein.

Die Linearführung kann eine Rolle umfassen, sodass die Bewegung unter geringem Kraftaufwand stattfinden kann. Die Rolle kann auf der Stange laufen, an der der Führungshebel aufgehängt ist. Die Rolle kann in einer Aufnahme des Führungshebels drehbar gelagert sein. Die Oberfläche der Rolle kann zugleich eine Führungsfläche des Schwenkgelenks bilden, die bei einer Schwenkbewegung des Führungshebels relativ zu einer anderen Oberfläche der Linearführung gleitet.

Insbesondere ist es möglich, dass die Linearführung von der Stange gebildet wird, an der der Führungshebel aufgehängt ist. Eine in der Aufnahme des Führungshebels angeordnete Rolle kann bei einer der Linearführung entsprechenden Bewegung auf der Stange abrollen. Bei einer Schwenkbewegung des Führungshebels kann die Rolle eine Gleitbewegung um die Achse der Stange vollführen.

Die Hauptrichtung des Führungshebels kann parallel zu der senkrechten Längsebene ausgerichtet sein. Der Führungshebel kann starr sein gegenüber Kräften aus anderen Richtungen, also gegenüber Kräften, die nicht in eine Schwenkbewegung des Führungshebels oder einer Schwenkbewegung des Gelenkhalters umgesetzt werden.

Die Aufhängung des Führungshebels an dem Mittelbügel kann oberhalb des ersten Schwenkgelenks und/oder des zweiten Schwenkgelenks angeordnet sein. Der Kabelstrang hängt dann an dem Führungshebel, sodass sich unter dem Einfluss der Schwerkraft ein stabiler Zustand des Führungshebels einstellt. Die von dem Kabelstrang ausgeübte Gewichtskraft in Verlängerung des Führungshebels wirken. Die Länge des Führungshebels kann zwischen 10 cm und 30 cm, vorzugsweise zwischen 15 cm und 25 cm liegen.

Die Erfindung betrifft außerdem ein mehrgliedriges Fahrzeug, bei dem zwischen einem ersten Wagen und einem zweiten Wagen ein solches Mittelbügelsystem angeordnet ist. Der erste Wagen und der zweite Wagen sind über ein Fahrzeuggelenk gelenkig miteinander verbunden. Das mehrgliedrige Fahrzeug kann insbesondere ein Gelenkbus sein, bei dem das Mittelbügelsystem zwischen einem Vorderwagen und einem Hinterwagen angeordnet ist. Möglich ist auch, dass das mehrgliedrige Fahrzeug eine Straßenbahn oder ein sonstiges schienengebundenes Fahrzeug ist.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines Mittelbügelsystems des Gelenkfahrzeugs aus Fig. 1;
- Fig. 3:: eine Ansicht von oben auf ein erfindungsgemäßes Mittelbügelsystem;
- Fig. 4:: die Kabelführung des Mittelbügelsystems aus Fig. 3 in einer Ansicht von oben;
- Fig. 5:: eine schematische Darstellung einer erfindungsgemäßen Kabelführung in einer Ansicht von oben;
- Fig. 6:: die Kabelführung aus Fig. 5 in einer Ansicht von der Seite;
- Fig. 7:: eine perspektivische Ansicht einer erfindungsgemäßen Kabelführung;
- Fig. 8:: ein Detail einer erfindungsgemäßen Kabelführung in einer vergrößerten Darstellung;
- Fig. 9:: die Ansicht gemäß Fig. 6 bei einer alternativen Ausführungsform der Erfindung.

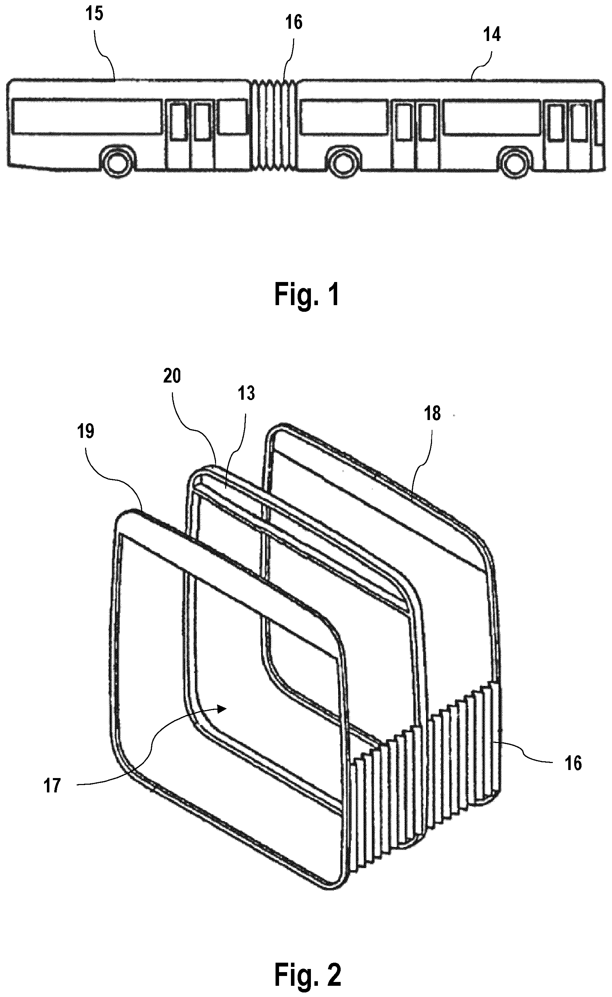

Ein in Fig. 1 gezeigter Gelenkbus umfasst einen Vorderwagen 14 und einen Hinterwagen 15. Der Vorderwagen 14 und der Hinterwagen 15 sind über ein nicht dargestelltes Fahrzeuggelenk derart miteinander verbunden, dass Passagiere während der Fahrt durch einen Durchgang 17 hindurch zwischen dem Vorderwagen 14 und dem Hinterwagen 15 wechseln können. Ein Faltenbalg 16 umgibt das Fahrzeuggelenk und den Durchgang 17. Das erfindungsgemäße Mittelbügelsystem ist im Zwischenraum zwischen dem Vorderwagen 14 und dem Hinterwagen 15 angeordnet und in Fig. 1 durch den Faltenbalg 16 verdeckt.

Fig. 2 zeigt den ersten Endrahmen 18 des Vorderwagens 14 und den zweiten Endrahmen 19 des Hinterwagens 15. Der Faltenbalg 16 ist in Fig. 2 nur ausschnittsweise gezeigt. Zwischen dem ersten Endrahmen 18 und dem zweiten Endrahmen 19 ist ein Mittelbügel 20 angeordnet, der in Querrichtung 26 ausgerichtet ist und der dem Faltenbalg 16 zusätzlichen Halt vermittelt.

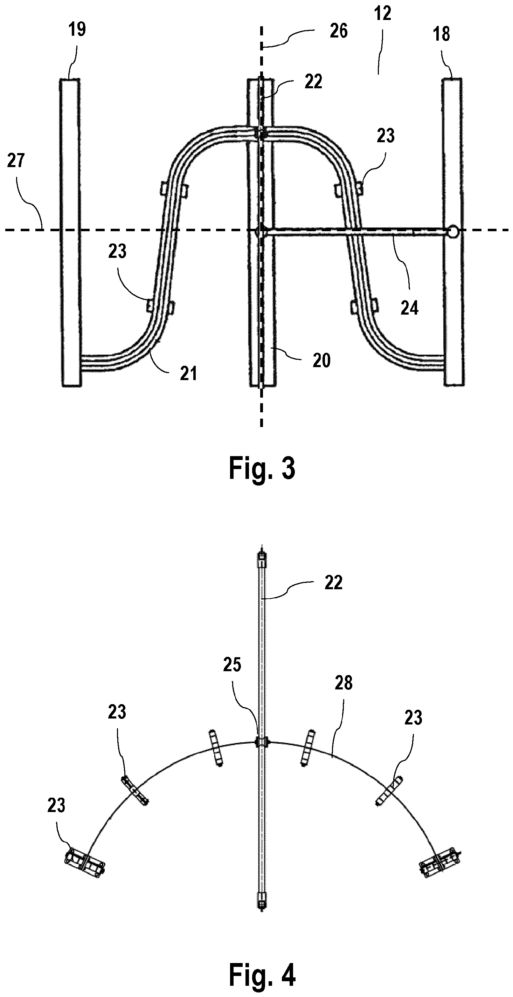

Gemäß Fig. 3 erstreckt sich ein Kabelstrang 21 zwischen dem ersten Endrahmen 18 und dem zweiten Endrahmen 19. Der Kabelstrang 21 nimmt im Zwischenraum zwischen dem Vorderwagen 14 und dem Hinterwagen 15 einen geschwungenen Weg, der im Wesentlichen in einer horizontalen Ebene liegt. Der Kabelstrang 21 ist auf diese Weise in der Lage, Bewegungen auszugleichen, die der Vorderwagen 14 und der Hinterwagen 15 relativ zueinander vollführen. Eine senkrechte Längsebene 27 schließt einen rechten Winkel mit der Querrichtung 26, also mit der Ebene des Mittelbügels 20 ein.

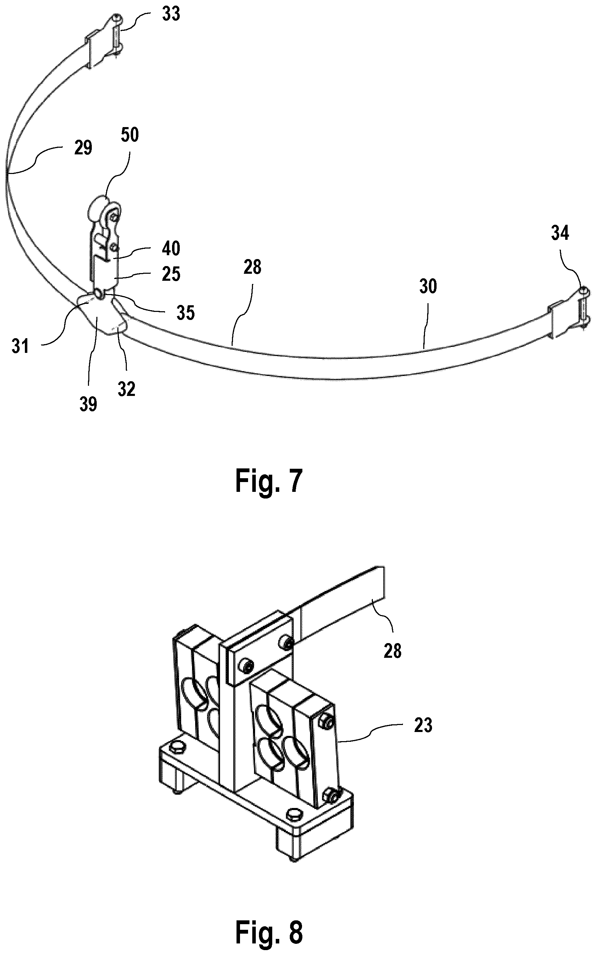

In Fig. 4 ist die Kabelführung ohne Kabel dargestellt. Danach umfasst die Kabelführung eine mittig zwischen den Kabeln angeordnete Blattfeder 28, die erfindungsgemäß aus einer ersten Blattfederkomponente 29 und einer zweiten Blattfederkomponente 30 zusammengesetzt ist und die sich parallel zu dem Kabelstrang 21 erstreckt. An der Blattfeder 28, die auf unten näher erläuterte Weise mit einer Querstange 22 des Mittelbügels 20 verbunden ist, sind Trageelemente 23 aufgehängt. In den Trageelementen 23 sind gemäß Fig. 8 Öffnungen ausgebildet, durch die die Kabel des Kabelstrangs 21 hindurchgeführt sind. In der beispielhaften Darstellung gemäß Fig. 8 werden auf beiden Seiten der Blattfeder 28 jeweils drei Kabel geführt. Durch die Blattfeder 28 und die Trageelemente 23 unterliegt der Kabelstrang 21 einer definierten Führung.

Der Mittelbügel 20 ist gemäß Fig. 3 über eine starre Lenkstange 24 mit dem ersten Endrahmen 18 verbunden. Sowohl zwischen der Lenkstange 24 und dem ersten Endrahmen 18 als auch zwischen der Lenkstange 24 und dem Mittelbügel 20 ist ein Gelenk ausgebildet, das Schwenkbewegungen um eine senkrechte Gelenkachse zulässt. Wenn der Gelenkbus also um eine Kurve fährt und in seitlicher Richtung einknickt, kann der Mittelbügel 20 die entsprechende Schwenkbewegung nachvollziehen, so dass er permanent ungefähr eine Mittelposition zwischen dem ersten Endrahmen 18 und dem zweiten Endrahmen 19 einnimmt. Fährt der Gelenkbus hingegen über eine Kuppe, so wird die entsprechende Nickbewegung nur zwischen dem Mittelbügel 20 und dem zweiten Endrahmen 19 ausgeglichen. Der Abstand zwischen dem ersten Endrahmen 18 und dem Mittelbügel 20 bleibt aufgrund der Lenkstange 24 konstant. Bei Nickbewegungen ist der Mittelbügel 20 also nicht in einer Mittelposition zwischen dem ersten Endrahmen 18 und dem zweiten Endrahmen 19.

Die Kabelführung umfasst eine Querstange 22, die oberhalb eines oberen Rahmenteils des Mittelbügels 20 angeordnet ist. Die Querstange 22 erstreckt sich in Querrichtung parallel zu dem Mittelbügel 20. Zwischen der Querstange 22 und dem oberen Rahmenteil des Mittelbügels 20 bleibt ein Freiraum 13, durch den der Kabelstrang 21 hindurchgeführt ist.

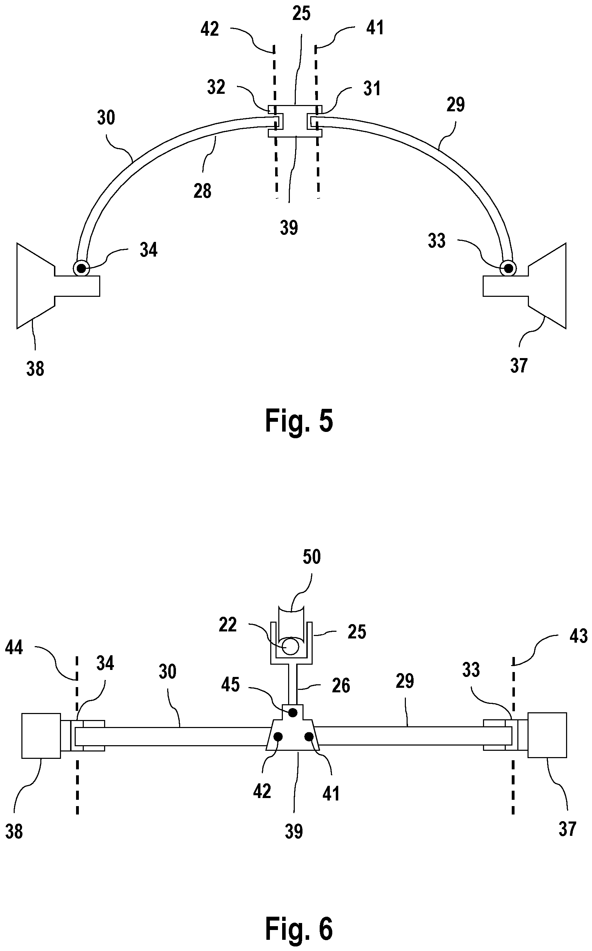

Die Blattfeder ist über einen Führungshebel 25 an der Querstange 22 aufgehängt, siehe Fig. 6, 7. Der Führungshebel 25 umfasst gemäß Fig. 6 eine Aufnahme, in der eine Rolle 50 drehbar gelagert ist. Die Aufnahme umfasst zwei Schenkel, die die Querstange 22 zwischen sich einschließen. Die ebenfalls zwischen den Schenkeln eingeschlossene Rolle 50 läuft auf der Oberseite der Querstange 22. Die Querstange 22 ist im Querschnitt kreisförmig, sodass der Führungshebel 25 um die Achse der Querstange 22 geschwenkt werden kann. Die Rolle 50 gleitet bei einer solchen Schwenkbewegung in Umfangsrichtung auf der Oberfläche der Querstange 22.

Eine Bewegung des Mittelbügels 20 relativ zu dem Kabelstrang 21 in Längsrichtung wird demnach aufgenommen durch eine Schwenkbewegung des Führungshebels 25 um die Querstange 22. Eine Bewegung des Mittelbügels 20 relativ zu dem Kabelstrang 21 in Querrichtung wird aufgenommen, indem die Rolle 50 des Führungshebels 25 entlang der Querstange 22 läuft. Der Kabelstrang 21 wird durch den Führungshebel 25 in einem definierten Abstand zu der Querstange 22 gehalten.

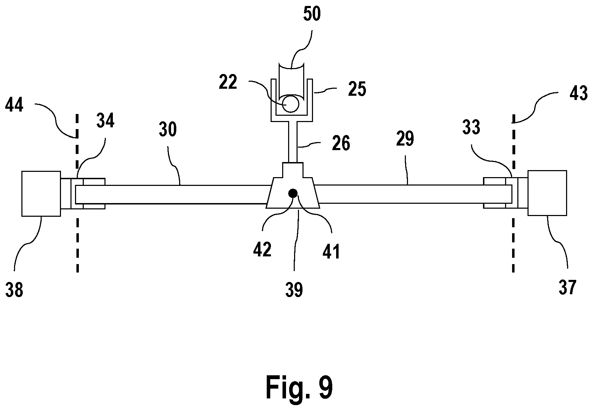

Die Blattfeder 28 umfasst eine erste Blattfederkomponente 29 und eine zweite Blattfederkomponente 30, siehe Fig. 5, 6. Die erste Blattfederkomponente 29 erstreckt sich von dem Führungshebel 25 bis zu einer an dem ersten Endrahmen 18 angebrachten ersten Konsole 37. Die zweite Blattfederkomponente 30 erstreckt sich von dem Führungshebel 25 bis zu einer an dem zweiten Endrahmen 19 angebrachten zweiten Konsole 38. Jeweils ein zentrales Ende der ersten Blattfederkomponente 29 und der zweiten Blattfederkomponente 30 ist an einem Gelenkhalter 39 des Führungshebels 25 angebracht. Die Verbindung zwischen der ersten Blattfederkomponente 29 und dem Gelenkhalter 39 erfolgt über ein erstes Schwenkgelenk 31 mit einer ersten Schwenkachse 41. Die Verbindung der zweiten Blattfederkomponente 30 mit dem Gelenkhalter 39 erfolgt über ein zweites Schwenkgelenk 32 mit einer zweiten Schwenkachse 42. Die Schwenkachsen 41, 42 sind parallel zueinander und parallel zu der Querstange 22 des Mittelbügels 20 ausgerichtet. Die senkrechte Längsebene 27 wird durch die Schwenkachsen 41, 42 unter einem rechten Winkel geschnitten. Die Fig. 6 zeigt eine Ausführungsform, bei der die erste Schwenkachse 41 und die zweite Schwenkachse 42 einen Abstand zueinander haben. Bei der alternativen Ausführungsform gemäß Fig. 9 sind die erste Schwenkachse 41 und die zweite Schwenkachse 42 miteinander koaxial.

Das periphere Ende der ersten Blattfederkomponente 29 ist über ein drittes Schwenkgelenk 33 an der ersten Konsole 37 angebracht. Das periphere Ende der zweiten Blattfederkomponente 30 ist über ein viertes Schwenkgelenk 34 an der zweiten Konsole 38 angebracht. Die Schwenkachse 43 des dritten Schwenkgelenks 33 und die Schwenkachse 44 des vierten Schwenkgelenks 34 sind senkrecht ausgerichtet, schließen also mit der Querrichtung 26 und mit der Längsrichtung einen rechten Winkel ein. Indem jede der Blattfederkomponenten 29, 30 über zwei senkrecht zueinanderstehende Schwenkgelenke an benachbarte Strukturen angeschlossen ist, werden insbesondere bei Nickbewegungen des Gelenkfahrzeugs die Spannungen innerhalb der Blattfederkomponenten 29, 30 reduziert verglichen mit einer Blattfeder, die sich als durchgehendes Teil von der ersten Konsole 37 bis zur zweiten Konsole 38 erstreckt.

Zu erkennen in Fig. 7: Der Führungshebel 25 ist aus einem Hebelteil 40 und dem Gelenkhalter 39 zusammengesetzt. Zwischen dem Hebelteil 40 und dem Gelenkhalter 39 ist ein fünftes Schwenkgelenk 35 ausgebildet, dessen Schwenkachse 45 parallel zu der ersten Schwenkachse 41 und der zweiten Schwenkachse 42 ausgerichtet ist. Durch das fünfte Schwenkgelenk 45 ergibt sich eine weitere Reduktion der mechanischen Spannungen, weil das Hebelteil 40 seine Ausrichtung unabhängig von dem Gelenkhalter 39 ändern kann.

**Bezugszeichenliste**

| | |
|---|---|
| Vorderwagen | 14 |
| Hinterwagen | 15 |
| Faltenbalg | 16 |
| Durchgang | 17 |
| Erster Endrahmen | 18 |
| Zweiter Endrahmen | 19 |
| Mittelbügel | 20 |
| Kabelstrang | 21 |
| Linearführung | 22 |
| Trageelement | 23 |
| Lenkstange | 24 |
| Führungshebel | 25 |
| Querrichtung | 26 |
| Senkrechte Längsebene | 27 |
| Blattfeder | 28 |
| Erste Blattfederkomponente | 29 |
| Zweite Blattfederkomponente | 30 |
| Erstes Schwenkgelenk | 31 |
| Zweites Schwenkgelenk | 32 |
| Drittes Schwenkgelenk | 33 |
| Viertes Schwenkgelenk | 34 |
| Fünftes Schwenkgelenk | 35 |
| Erste Konsole | 37 |
| Zweite Konsole | 38 |
| Gelenkhalter | 39 |
| Hebelteil | 40 |
| Erste Schwenkachse | 41 |
| Zweite Schwenkachse | 42 |
| Dritte Schwenkachse | 43 |
| Vierte Schwenkachse | 44 |
| Fünfte Schwenkachse | 45 |
| Rolle | 50 |

## Patentansprüche

1. Mittelbügelsystem für ein zwischen einem ersten Wagen (14) und einem zweiten Wagen (15) eines mehrgliedrigen Fahrzeugs angeordnetes Fahrzeuggelenk, umfassend einen in Querrichtung (26) ausgerichteten Mittelbügel (20) und einen sich zwischen dem ersten Wagen (14) und dem zweiten Wagen (15) erstreckenden Kabelstrang (21), wobei der Mittelbügel (15) einen für Passagiere bestimmten Durchgang (17) umschließt und wobei der Kabelstrang (21) oberhalb des Durchgangs (17) angeordnet ist, mit einer ersten Blattfederkomponente (29) zum Halten eines ersten Abschnitts des Kabelstrangs (21) und mit einer zweiten Blattfederkomponente (30) zum Halten eines zweiten Abschnitts des Kabelstrangs (21), wobei die erste Blattfederkomponente (29) und die zweite Blattfederkomponente (30) über einen Führungshebel (25) mit dem Mittelbügel (20) verbunden sind, wobei die erste Blattfederkomponente (29) über ein erstes Schwenkgelenk (31) mit dem Führungshebel (25) verbunden ist, wobei die zweite Blattfederkomponente (30) über ein zweites Schwenkgelenk (32) mit dem Führungshebel (25) verbunden ist und wobei die erste Schwenkachse (41) des ersten Schwenkgelenks (31) und die zweite Schwenkachse (42) des zweiten Schwenkgelenks (32) eine senkrechte Längsebene (27) des Mittelbügelsystems (12) schneiden.

2. Mittelbügelsystem nach Anspruch 1, wobei die erste Blattfederkomponente (29) über ein drittes Schwenkgelenk (33) mit dem ersten Wagen (14) verbunden ist.

3. Mittelbügelsystem nach Anspruch 2, wobei die dritte Schwenkachse (43) des dritten Schwenkgelenks (33) eine andere Ausrichtung hat als die erste Schwenkachse (41).

4. Mittelbügelsystem nach einem der Ansprüche 1 bis 3, wobei die zweite Blattfederkomponente (30) über ein viertes Schwenkgelenk (34) mit dem zweiten Wagen (15) verbunden ist.

5. Mittelbügelsystem nach Anspruch 4, wobei die vierte Schwenkachse (44) des vierten Schwenkgelenks (34) eine andere Ausrichtung hat als die zweite Schwenkachse (42).

6. Mittelbügelsystem nach einem der Ansprüche 1 bis 5, wobei der Abstand zwischen einem zentralen Ende der ersten Blattfederkomponente (29) und einem zentralen Ende der zweiten Blattfederkomponente (30) kleiner ist als 20 cm.

7. Mittelbügelsystem nach einem der Ansprüche 1 bis 6, **dadurch gekennzeichnet, dass** die von dem Kabelstrang (21) ausgeübte Gewichtskraft in Verlängerung des Führungshebels (25) wirkt.

8. Mittelbügelsystem nach einem der Ansprüche 1 bis 7, wobei der Führungshebel (25) ein Hebelteil (40) sowie einen Gelenkhalter (39) für das erste Schwenkgelenk (31) und für das zweite Schwenkgelenk (32) umfasst, wobei der Gelenkhalter (39) über ein fünftes Schwenkgelenk (35) mit dem Hebelteil (40) verbunden ist.

9. Mittelbügelsystem nach Anspruch 8, wobei die fünfte Schwenkachse (45) des fünften Schwenkgelenks (35) parallel zu der ersten Schwenkachse (41) und der zweiten Schwenkachse (42) ausgerichtet ist.

10. Mittelbügelsystem nach einem der Ansprüche 1 bis 9, wobei der Führungshebel (25) über eine in Querrichtung (26) ausgerichtete Linearführung (22) an dem Mittelbügel (20) aufgehängt ist.

11. Mittelbügelsystem nach Anspruch 10, wobei der Führungshebel (25) schwenkbar an der Linearführung (22) aufgehängt ist.

12. Mehrgliedriges Fahrzeug mit einem ersten Wagen (14) und einem zweiten Wagen (15), wobei der erste Wagen (14) und der zweite Wagen (15) über ein Fahrzeuggelenk gelenkig miteinander verbunden sind, umfassend ein zwischen dem ersten Wagen (14) und dem zweiten Wagen (15) angeordnetes Mittelbügelsystem (12), wobei das Mittelbügelsystem (12) nach einem der Ansprüche 1 bis 11 ausgebildet ist.
